# EUROPEAN PATENT APPLICATION

(11) **EP 2 397 938 A1**
(43) Date of publication of application: **21.12.2011**
(21) Application number: 10305639.6
(22) Date of filing: 15.06.2010
(51) Int. Cl.: G06F 3/06, G06F 3/048

(54) **Data storage management method, device and user interface**

(71) Applicant: FRANCE TELECOM, 75015 Paris (FR)
(72) Inventor: Guillou, Aurelien, LONDON TW9 2JB (GB); Vennegues, Elise, LONDON W4 4BU (GB)
(74) Representative: Cabinet Plasseraud

(57) **Abstract**

A method of managing data storage for a device (1) having a local storage memory (4) and a user interface, the device being capable of transferring data to a network (2) having a remote storage memory (5), the remote storage memory having a higher storage capacity than the local storage memory. The method comprises: obtaining, by means of said user interface of the device, a target maximum storage criterion to be satisfied by the local storage memory; and on detection that said target maximum storage criterion is not satisfied by the local storage memory, selecting a set of data stored in the local storage memory to be transferred from the device to the network for storage in the remote storage memory, in such a way that the target maximum storage criterion be subsequently satisfied by the local storage memory.

## Description

The present invention relates to data storage management.

Many devices have a local storage memory, but with a limited capacity. This is particularly true - though not only - for mobile devices, such as mobile phones, smart phones, personal digital assistants, MIDs (Mobile Internet Devices), netbooks, laptops, etc.

On the other hand, more and more contents are generated by the device users, and more and more applications are downloaded on the devices e.g. from application shops.

So there is a need to find ways to manage the limited storage resources of the devices.

One idea is to make use of the capability of many devices to transfer data to a network to take benefit from its great remote storage capacity so as to free storage spaces on the devices.

In this vein, US 6,269,382 discloses some ways to migrate data from a local storage to a remote storage, by using migration policies specified by a so-called hierarchical storage manager. Thus in this mechanism, the determination of the migration policies is not influenced by a final user. And no specific means are provided to that end, in particular as to how and when data are to be migrated.

The present invention improves this situation.

To do so, the invention proposes a method of managing data storage for a device having a local storage memory and a user interface, the device being capable of transferring data to a network having a remote storage memory, the remote storage memory having a higher storage capacity than the local storage memory. The method comprises:
- obtaining, by means of said user interface of the device, a target maximum storage criterion to be satisfied by the local storage memory; and
- on detection that said target maximum storage criterion is not satisfied by the local storage memory, selecting a set of data stored in the local storage memory to be transferred from the device to the network for storage in the remote storage memory, in such a way that the target maximum storage criterion be subsequently satisfied by the local storage memory.

So in this method, the criterion used to trigger a data transfer from the device to the network is set by the device user by means of an appropriate user interface. This ensures much more flexibility in the data storage management from the user's point of view compared to the prior art.

Besides, the setting of a target maximum storage criterion appears as an efficient way of controlling storage on the device as well as the amount of data transfers. As a non-limiting example, it may avoid unnecessary data transfers when the occupancy of the device local memory is considered to be low.

According to advantageous aspects of the invention which may be combined in any possible way:
- the target maximum storage criterion comprises a target maximum storage ratio between the local storage memory and the remote storage memory. This offers to the user a certain control on the distribution between local and remote storage;
- the target maximum storage criterion comprises a target maximum occupancy of the local storage memory. This offers to the user a certain control on the occupancy of the local storage memory and thus on the space kept free in the local storage memory;
- the target maximum storage criterion to be satisfied by the local storage memory is set by means of a movable cursor displayed on said user interface of the device. This offers a simple and efficient experience for the user to manage the data storage;
- the method further comprises obtaining, by means of said user interface of the device, a data type related storage criterion to be satisfied by the local storage memory, the selection of said set of data taking account of said data type related storage criterion. This additional criterion offers even more flexibility to the user in the data storage management, based on data type user preferences;
- the method further comprises obtaining, by means of said user interface of the device, a data usage criterion relating to data stored in the local storage memory, the selection of said set of data taking account of said data usage criterion. This may allow limiting the data transfers between the device and the network by keeping frequently used data locally while storing less frequently used data remotely;
- the selection of said set of data further takes account of a size of data stored in the local storage memory. This may allow limiting the number of data files transferred from the device to the network;
- the method further comprises transferring from the device to the network the selected set of data depending on a level of battery of the device. This may avoid having a data transfer interrupted because the device would have turned off due to lack of battery resources;
- the method further comprises transferring from the device to the network the selected set of data depending on a type of the network. This may allow improving the data transfer by taking benefit from specificities of the network compared to another network;
- the method further comprises transferring from the device to the network the selected set of data depending on an estimate quality of a communication link between the device and the network. This may ensure a quality data transfer, in terms of completion and/or integrity and/or duration and/or other;
- the method further comprises transferring from the device to the network the selected set of data depending on device processing or bandwidth availability. This may allow preserving processing resources and/or bandwidth for the data transfer or other actions;
- the device is further capable of transferring data from the network in such a way that the target maximum storage criterion be still satisfied by the local storage memory after a data transfer from the network. This may avoid quick successive uploads and downloads;
- the data transfer from the network to the device depends on at least one of: a level of a battery of the device, a type of the network, an estimate quality of a communication link between the device and the network, a processing availability of the device, and a bandwidth availability. This allows download to have the same benefits as mentioned above for the upload case.

The invention also proposes a device arranged for carrying out the method as mentioned above, the device having a local storage memory and being capable of transferring data to a network having a remote storage memory, the remote storage memory having a higher storage capacity than the local storage memory. The device comprises:
- a user interface arranged for obtaining a target maximum storage criterion to be satisfied by the local storage memory; and
- a selection unit for, on detection that said target maximum storage criterion is not satisfied by the local storage memory, selecting a set of data stored in the local storage memory to be transferred from the device to the network for storage in the remote storage memory, in such a way that the target maximum storage criterion be subsequently satisfied by the local storage memory.

The invention also proposes a user interface for a device arranged for carrying out the method as mentioned above, the device having a local storage memory and being capable of transferring data to a network having a remote storage memory, the remote storage memory having a higher storage capacity than the local storage memory. The user interface is further arranged for:
- obtaining a target maximum storage criterion to be satisfied by the local storage memory; and
- transmitting the received target maximum storage criterion to a selection unit of the device arranged for, on detection that the received target maximum storage criterion is not satisfied by the local storage memory, selecting a set of data stored in the local storage memory to be transferred from the device to the network for storage in the remote storage memory, in such a way that the received target maximum storage criterion be subsequently satisfied by the local storage memory.

The preferred features of the above aspects which are indicated by the dependent claims may be combined as appropriate, and may be combined with any of the above aspects of the invention, as would be apparent to a person skilled in the art.
- FIG.1 is a schematic exemplary system in which the invention may take place;
- FIGs.2A-2C are schematic exemplary views allowed by a device user interface according to some embodiments of the invention;
- FIGs.3A-3B are schematic exemplary views allowed by a device user interface according to other embodiments of the invention;
- FIG.4 is schematic exemplary view allowed by a device user interface according to still another embodiment of the invention;
- FIG.5 is schematic exemplary decision making process that may be carried out according to advantageous aspects of the invention;
- FIG.6 is a schematic exemplary architecture for a device according to embodiments of the invention.

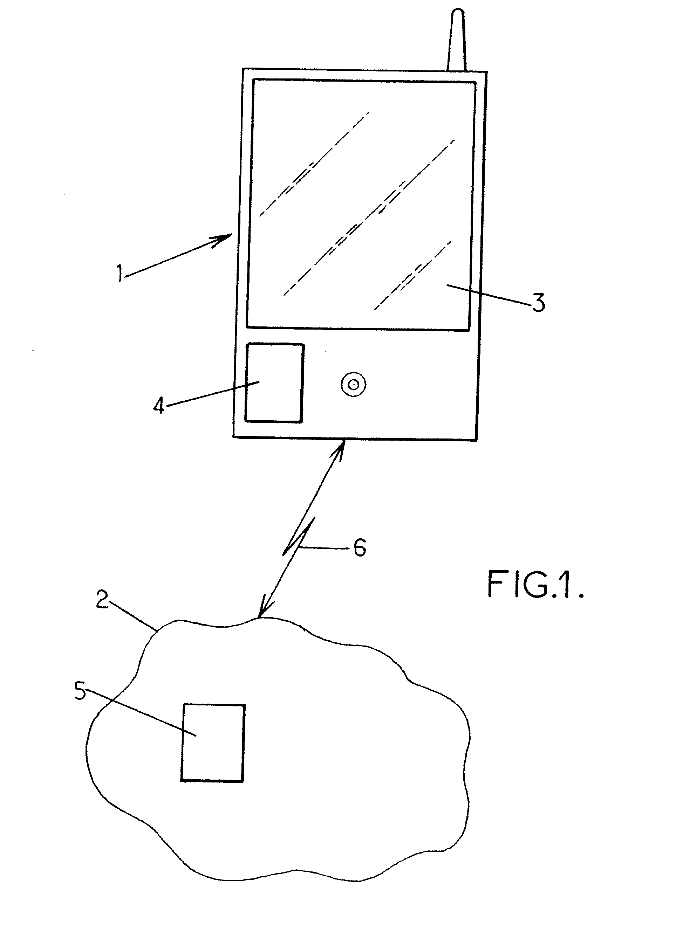

FIG.1 shows an example of a system in which the invention may take place. In this example, the system comprises a mobile phone (or smartphone) 1 having a local storage memory 4 of any type (RAM, ROM, flash, etc.) for storing any type of data. The mobile phone 1 also includes a screen 3 on which information can be presented visually to a user through a graphic user interface GUI.

The mobile phone 1 is capable of transferring data to a network 2 via an appropriate communication link which may a radio link 6. The network 2 also has storage memory 5, which is called hereinafter a remote storage memory with respect to the mobile phone 1. The remote storage memory 5 can consist in only one memory device, or a plurality of memory devices which constitute a remote storage memory altogether. In any case, the remote storage memory 5 has a higher storage capacity than the local storage memory.

It will be understood that the example of FIG.1 is non-limiting. Any type of device having a local storage memory and a user interface may be used instead of the mobile phone 1. It may comprise a fixed phone, a personal digital assistant, a MID (Mobile Internet Device), a netbook, a laptop, a desktop, or other. The user interface may be at least partly a visual interface, but it may also use other types of communication with the user, such as sound, touch or other, in addition to or instead of the GUI.

Likewise, the network may be any type of fixed (PSTN, ISDN, IP, etc.) or mobile network (GSM, GPRS, UMTS, LTE, WiFi, WiMax, MIP, Bluetooth, etc.). The device supports the same communication technology as the network, so as to be able to transfer data therewith. The communication link between the device and the network is also chosen in relation with the communication technology.

According to the invention, data storage for the device is managed so as to be distributed between the local storage memory and the remote storage memory, under control of the device user. With respect to FIG.1, this means that part of the data may be stored in the local storage memory 4 of the mobile phone 1, while another part of the data may be stored in the remote storage memory 5 of the network 2.

To that end, a target maximum storage criterion to be satisfied by the local storage memory 4 is obtained by means of the user interface of the mobile phone 1. The target maximum storage criterion is any criterion ensuring that the amount of data stored in the local storage memory 4 does not exceed a certain amount.

According to a first example, such target maximum storage criterion may comprise a target maximum storage ratio between the local storage memory 4 and the remote storage memory 5. For example, the target maximum storage ratio may be such that the amount of data stored in the local storage memory 4 does not exceed a certain percentage, say 14%, of the total amount of data stored with respect to the mobile phone 1, both in the local storage memory 4 and the remote storage memory 5. From the network's point of view, the same target maximum storage ratio criterion would be such that the amount of data stored in the remote storage memory 5 is kept above 86% of the total amount of data stored with respect to the mobile phone 1, both in the local storage memory 4 and the remote storage memory 5.

According to a second example, which may be used in addition to or instead of the first example, the target maximum storage criterion may comprise a target maximum occupancy of the local storage memory 4. For example, the target maximum occupancy may be such that the amount of data stored in the local storage memory 4 does not exceed a certain percentage, say 30%, of the total storage capacity of the local storage memory 4. This criterion could also be expressed as a requirement to keep at least 70% of free space in the local storage memory 4.

Alternatively or in addition, other target maximum storage criterion criteria may be used. As an example, while only percentages have been considered above, absolute values could be defined. For example, the user of the mobile phone 1 could decide that the local storage memory 4 should not contain more than 5 Mb of data.

In order to obtain a target maximum storage criterion, a request can be addressed to the user of the mobile phone 1 through the user interface offered by the mobile phone. As an example, the user may be prompted via the screen 3 of the mobile phone 1 to input a target maximum storage criterion.

Alternatively, the user may input an appropriate target maximum storage criterion via the user interface from its own motion, without being requested to do so. Inputting a target maximum storage criterion can be done in any possible way. For example, the mobile phone user may enter information by touching the screen 3, typing letters or figures on a keyboard or keypad of the mobile phone 1, or by any other way. Some non-limiting examples for obtaining a target maximum storage criterion are given below with respect to the system shown in FIG.1.

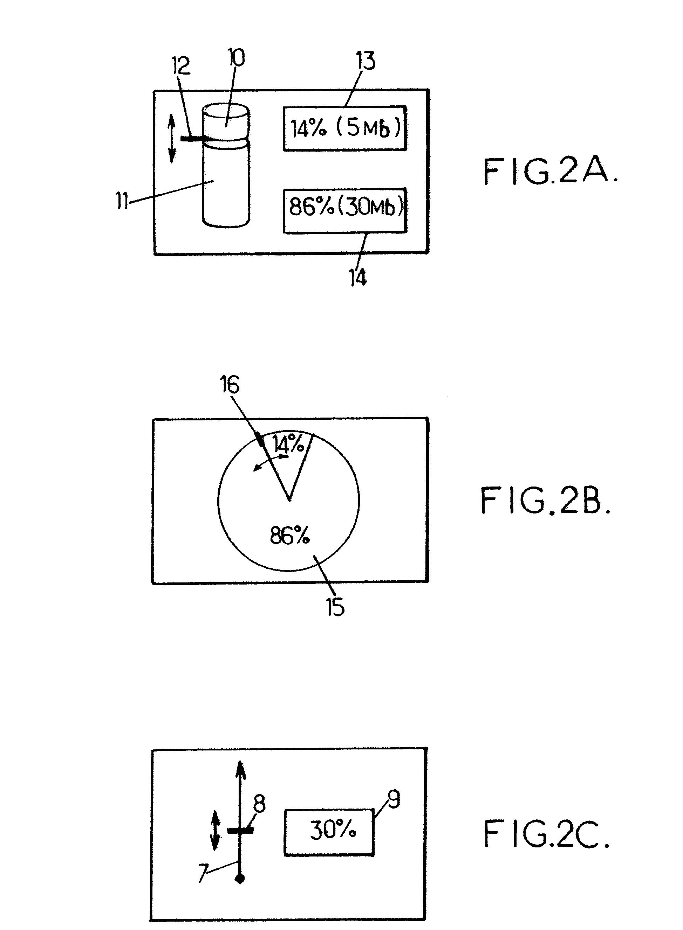

In FIG.2A, information is presented on the screen 3 of the mobile phone 1 in the form of two aligned geometric elements 10 and 11 (cylinders, rectangles, or others) corresponding to the amount of data stored in the local storage memory 4 and to the amount of data stored in the remote storage memory 5 respectively. A cursor 12 is displayed on this representation to mark a separation line between the two elements 10 and 11. This cursor can be movable so as to enlarge one of the elements with regard to the other. Windows 13 and 14 are also shown beside the two elements 10 and 11, so as to indicate the percentage and/or the absolute value of data stored in the local storage memory 4 and the remote storage memory 5 respectively. The figures may be changed directly in these windows, without moving the cursor 12.

FIG.2B is an alternative representation to the one of FIG.2A. Instead of two aligned elements 10 and 11, the distribution between the local storage memory 4 and the remote storage memory 5 is shown in the form of a pie chart 15. A movable cursor 16 can be used to change the distribution.

In FIG.2C, an indication is provided with respect to the local storage memory 4 only. This indication may correspond to occupancy of the local storage memory 4. The exact figure is shown in the window 9, where it can be modified by the mobile phone user. The indication is further provided in a more visual way with the position of a cursor 8 on an arrow 7. The user may move the cursor 8 along the arrow 7, so as to modify said occupancy value.

So by changing the figures in one of the windows 9 or 13-15 and/or by moving one of the cursors 8, 12 or 16, the user of the mobile phone 1 may determine a target maximum storage criterion to be satisfied by the local storage memory 4. Many other representations may be envisaged to obtain a target maximum storage criterion to be satisfied by the local storage memory by means of a user interface, as will appear by one skilled in the art.

In addition to the target maximum storage criterion, other criteria may be obtained by means of the mobile phone user interface. Those criteria may relate to more specific information. By using such additional criteria, the user is offered even more flexibility in managing his/her data storage.

As a first example, a data type related storage criterion to be satisfied by the local storage memory 4 may be obtained through the user interface. This criterion aims at avoiding exceeding a respective amount of data stored in the local storage memory 4 by taking account of the data type. In this way, different distributions may be obtained between the local storage memory 4 and the remote storage memory 5 depending on the data type. The data type may include all or part of the following: videos, music, pictures, images, text, others. Any other data type category may be defined in addition or instead.

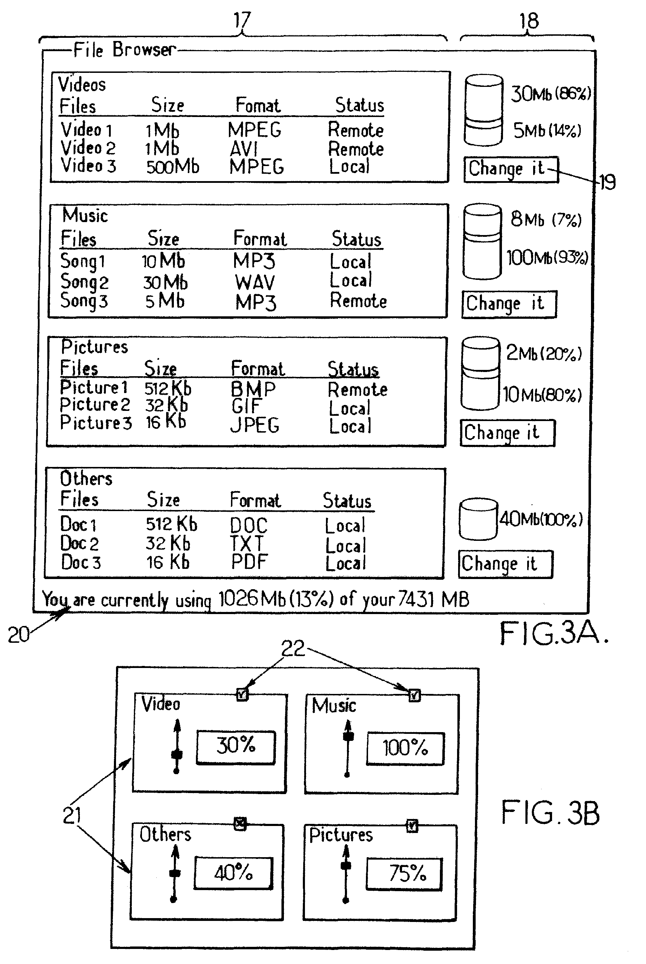

This situation is illustrated in FIG.3A, which shows a list 17 of all data files stored, sorted according to their type. The list also indicates the size and a format of each data file. A status field informs of whether each data file is stored in the local storage memory 4 or in the remote storage memory 5. On the right portion of FIG.3A, a chart representing the distribution between both memories is provided like in FIG.2A discussed above, but for each data type individually. A soft key or button "Change it" 19 and/or a cursor may allow changing this distribution with respect to a given data type respectively. The total amount of data stored in the local storage memory 4 and its proportion may also be indicated as shown by reference 20.

A variant is shown in FIG.3B for the same data type related storage criterion. This example corresponds to the one described with reference to FIG.2C, but by further taking account of the data type. Thus a data type related target storage value is defined by the mobile user with respect to each data type category (video, music, pictures, others) in corresponding windows 21. A box 22 is provided for each data type category, so as to indicate whether the inputted value should be taken into account (checked box) or not (unchecked box) as target values to be satisfied by the local storage memory 4.

According to another example, which may be used in addition to or instead of the previous one, a data usage criterion relating to data stored in the local storage memory 4 may be obtained by means of the mobile phone user interface. By "data usage", it is meant any use of the data by the mobile phone user, such as a displaying a text for reading, displaying a video for watching, displaying a picture for looking, playing an audio file for listening, etc. The idea of this criterion is to allow the least (or little) frequently used data to be stored remotely, while the most (or much) frequently used data are stored locally. This is based on the assumption that data frequently used by the mobile phone user are likely to be used again in the near future. So they can be stored locally in order to avoid too frequent data transfers between the mobile phone 1 and the network 2. In contrast, less frequently used data are less likely to be used again in the near future and thus to generate too frequent data transfers.

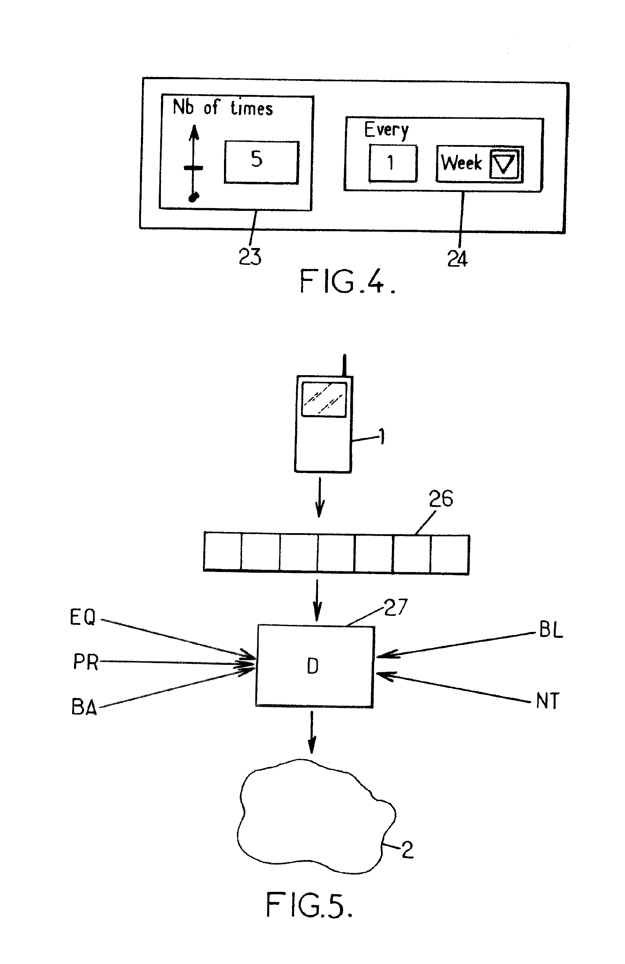

FIG.4 illustrates an exemplary way of taking account the data usage via the mobile phone user interface. In this example, a window 23 indicates a number of times data are used. An absolute value and/or a representation with a cursor may correspond to this number. Another window 24 indicates a time period (e.g. hour, day, week, month, etc.), which can be selected for example via a drop-down menu or other. In the example shown in FIG.4, the occurrence is of 5 times every week. If data in the local storage memory 4 are not used with this occurrence, they may be candidates for storage in the remote storage memory 5. On the contrary, if some data stored in the local storage memory 4 are used at least 5 times in a week, they may remain in the local storage memory 4.

Many other examples may be envisaged as will appear to one skilled in the art.

Once a target maximum storage criterion has been obtained, it may be checked whether this criterion is satisfied by the local storage memory 4 or not. The checking may be done at certain points in time, for example on a periodical basis (e.g. with the period defined in the window 24), or when particular events occur (e.g. when the free local storage falls below a determined threshold of the total local storage capacity).

If it is detected that the obtained target maximum storage criterion is not satisfied by the local storage memory 4, this means that the local storage memory 4 stores too many data compared to the requirements set by the user of the mobile phone 1. To limit the current storage in the local storage memory 4, a set of data stored in the local storage memory 4 is selected to be transferred from the mobile phone 1 to the network 2 for storage in the remote storage memory 5. This selection, which may be performed by a selection unit of the mobile phone 1, is such that the target maximum storage criterion be subsequently satisfied by the local storage memory 4.

For example, with respect to the situation described above with reference to FIG.2A, let us assume that the actual total size of the data stored in the local storage memory 4 is 6 Mb (17%), while 29 Mb (83%) are stored in the remote storage memory 5. The target maximum storage criterion for the local storage memory 4 (5 Mb) is thus exceeded of 1 Mb. A set of data of at least 1 Mb may thus be selected for the target maximum storage criterion to be satisfied.

If another criterion is used in addition to the target maximum storage criterion, it may advantageously be taken into account for selecting the set of data stored in the local storage memory 4 to be transferred from the mobile phone 1 to the network 2 for storage in the remote storage memory 5. Thus, with respect to the example of FIG.3A or FIG.3B, the selection of a set of data may attempt not to exceed the data type related target maximum storage values for one or several data types. With respect to the example of FIG.4, the selected set of data may relate to all least used data or the lowest number of little frequently used data which amount to a total size sufficient to satisfy the target maximum storage criterion, or other.

For example, let us assume that a set of data of at least 1 Mb must be selected so as to satisfy the target maximum storage criterion defined in FIG.2A. The mobile phone 1 may identify the, e.g. six, files of a total size of 1 Mb which should be transferred to the network to fit this criterion. The choice of these six files may be based on their usage. To do so, count values may be used. The count value for a given data file may be incremented e.g. by 1 unit each time said data file is used. So the six files selected may be the ones having the lowest count values. Alternatively, the six files selected may be the ones having the highest values Q=(1-C)xS, where C corresponds to a respective count value and S corresponds to a respective size. Other selection methods may be envisaged as will appear to one skilled in the art.

Advantageously, the mobile phone 1 may include a controller component in charge of updating the count values. Such controller may work as an event-driven process. Each time a data file is accessed on the mobile phone file system (possibly within directories specified by the user), an event may be handled by the controller. This event may have a predefined structure which permits to get e.g. the name, directory and access type of the file. This information may be recorded in a specific file as well as the number of times a file is accessed. This specific file may be a JSON based format which can be read by either a Web page (from JavaSscript), native and Java application (with JSON libraries).

An exemplary structure for such JSON based format specific file is given below for illustration purpose.

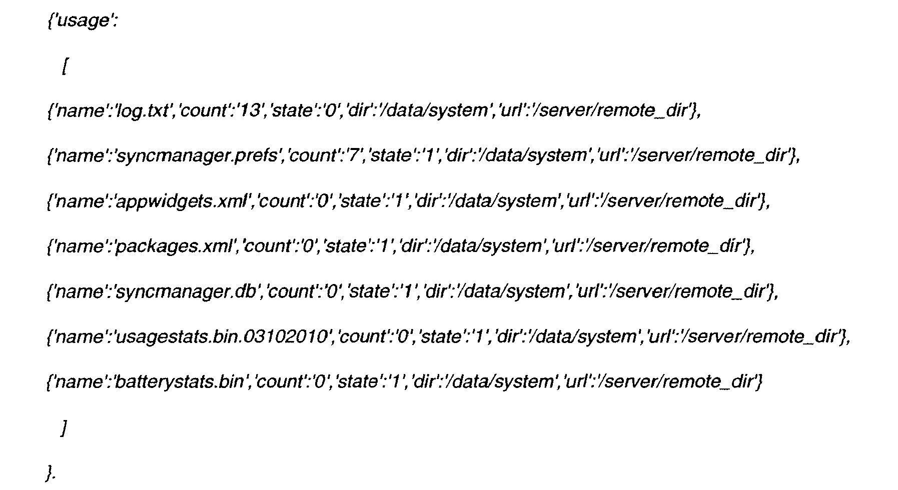

Based on this information, the controller may check if content needs to be uploaded on the remote storage memory 5 based on the criteria configured by the mobile phone user via the GUI. A file can be either on the mobile phone 1 itself or on a remote storage memory 5. The 'state' parameter tells if a file is stored locally on the device (=0) or remotely (=1). The 'dir' and 'url' parameters are respectively the local directory and the remote directory of the file.

Many other implementations may be envisaged as will appear to one skilled in the art.

All data of the set selected by the mobile phone 1 may be placed in a queue 26 to be transferred to the network 2 as shown in FIG.5. The data may be inputted and/or outputted from the queue 26 to be transferred to the network 2 in a specific order, which may again include the count values and/or the Q values and/or other.

One or several parameters may be used in view of the transfer of the selected set of data from the mobile phone 1 to the network 2. A decision unit D 27, which may part of the mobile phone 1 or another device, may be used for deciding when or whether selected data should be transferred from the mobile phone 1 to the network 2, as shown in FIG.5. As a non-limiting example, once the queue 26 has been fed with the selected set of data, the decision unit D 27 may output the data in the queue e.g. on a FIFO (First In First Out) basis, by taking account of one parameter or any combination of a plurality of parameters.

Those parameters may include a level of a battery of the mobile phone 1 (BL). For example, a battery level threshold may be defined, so that only when the actual battery level of the mobile phone 1 is higher than the threshold, data present in the queue 26 can be transmitted from the mobile phone 1 to the network 2. The battery level threshold is advantageously set so that the battery is not emptied when the data transfer is completed. Considering the battery level avoids an interruption of the data transfer because the mobile phone 1 would have turned off in the meantime.

Another parameter may relate to the type of the network 2 (NT). For example, data from the queue 26 may be transferred from the mobile phone 1 to the network 2, only if the network 2 is a radiocellular network, such as a UMTS or LTE network. Alternatively, if several networks 2 with different technologies are available, the data transfer may be performed to one of them depending on their technologies. For instance, a radiocellular network may be preferred compared to a WiFi network, but the data transfer may still be allowed to the WiFi network e.g. when only WiFi connectivity is available.

The parameters BL and NT may be combined for deciding about data transfer. For example, the decision unit D 27 may decide to transfer data in priority to a radiocellular network when the battery level of the mobile phone 1 is below a threshold, but to a WiFi network when the battery level of the mobile phone 1 is above a threshold. This is because WiFi networks are well adapted for multimedia content transfer but they consume more battery resource than radiocellular networks. Other strategies can be envisaged as will appear to one skilled in the art.

Another parameter that the decision unit D 27 may take into account relates to an estimate quality of a communication link between the mobile phone 1 and the network 2 (EQ). Any quality indicator may be used for that purpose. For example, the level of signal received by the mobile phone 1 from the network 2 (representative of the network coverage) and/or the level of signal received by the network 2 from the mobile phone 1 may be taken into consideration. To ensure that a data transfer from the mobile phone 1 to the network 2 can be completed in good conditions without loosing the data over the air and in a reasonable time, this data transfer may be allowed only when the estimate quality of a communication link between the mobile phone 1 and the network 2 is above a threshold.

Another parameter relates to the processing of the mobile phone 1 (PR). For example, data from the queue 26 may be transferred from the mobile phone 1 to the network 2 depending on an amount of CPU (Central Processing Unit) resources of the mobile phone 1 available. If those processing resources are below a threshold, they may not be enough to complete the data transfer or to allow another action with the mobile phone 1 (phone call, web browsing, use of an application such as a game, etc.) in parallel to the data transfer. In this case, only if the available processing resources are above a threshold, may the data transfer take place.

Still another parameter relates to bandwidth availability (BA). Thus, a data transfer from the mobile phone 1 to the network 2 may be authorized only when there is enough bandwidth available for that transfer. For instance, if only one carrier is available for transmission from the mobile phone 1 to the network 2 while the data transfer would need two carriers, the data transfer may be delayed.

Other parameters may be used in addition or instead of the ones mentioned above. Note that while comparison of a current value with a threshold is evoked above for each parameter, other ways of taking account of parameters for deciding of the data transfer may also be envisaged.

All or part of the above parameters may be checked, e.g. by comparison with a corresponding threshold, as long as there are data remaining in the queue 26. Checking may be done at certain points in time, for example on a periodical basis, or when particular events occur.

One, some or all of the above mentioned parameters and/or thresholds may be defined by the user of the mobile phone 1, through the mobile phone user interface. Specific windows may be displayed on the mobile phone screen 3 to that end. Alternatively, they may be defined automatically, for example by using default threshold values stored in the mobile phone 1 or received from the network 2.

It will be noted that while the detailed embodiment described so far makes a distinction between two successive stages, one relating to the selection of data and the following one relating to the transfer of selected data, both stages may be combined in a single stage. In this case, the parameters mentioned with reference to FIG.5 may be used in the data selection process, and/or the criteria defined with reference to FIGs.2-4 may be used in the data transfer decision process.

Advantageously, the mobile phone 1 is capable of transferring data from the network 2 via an appropriate communication link, which may be the same as the one used in uplink (e.g. the radio link 6) or be a different link.

Even if at least part of the data have been stored in the remote storage memory 5 of the network 2, the mobile phone user may wish to access those data as if they were stored locally in the local storage memory 4 of the mobile phone 1. Accessing those data implies transferring them from the network 2. A data transfer from the network 2 to the mobile phone 1 may also occur in other conditions, for example because the occupancy of the local storage memory 4 has become low, or for any other reason.

Like for the uplink case, transferring data from the network 2 may be performed in such a way that the target maximum storage criterion defined by the mobile phone user be still satisfied by the local storage memory 4 of the mobile phone 1 after the data transfer. This is to avoid too frequent successive transfers in both directions. For example, the mobile phone may evaluate the storage ratio between the local storage memory 4 and the remote storage memory 5 and/or the occupancy of the local storage memory 4 after the possible data transfer, compare it with the corresponding target value fixed by the mobile phone user and then authorize the download only when the comparison indicates that the target criterion would still be satisfied.

Advantageously, if the target maximum storage criterion cannot be satisfied any more by the local storage memory 4 should the data transferred from the network 2 be stored therein, it may be decided to access the data stored in the network 2 by streaming. In this case, the data are transferred to the mobile phone 1 but not all of them are stored simultaneously in the local storage memory 4.

One or several parameters may be taken into account to allow the data transfer from the network 2 to the mobile phone 1. Those parameters may comprise all or part of the parameters mentioned with reference to FIG.5, that is: a level of a battery of the mobile phone 1, a type of the network 2, an estimate quality of a communication link between the mobile phone 1 and the network 2, a processing availability of the mobile phone 1, and a bandwidth availability of the mobile phone 1. Other parameters may be envisaged in addition or instead as will appear to one skilled in the art.

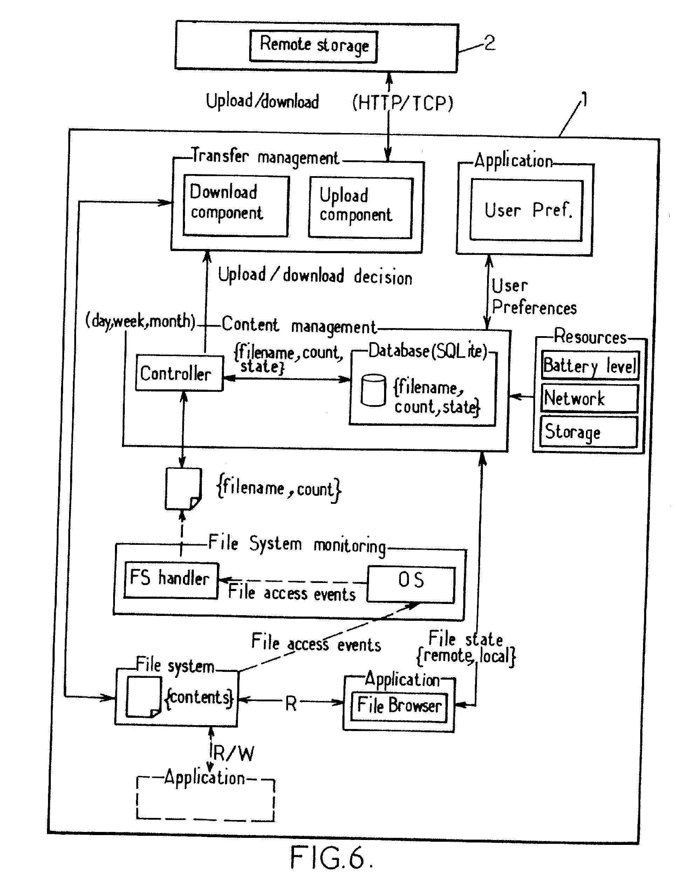

FIG.6 shows a non-limiting example of a component diagram for the mobile phone 1. In this architecture, the mobile phone 1 comprises a file system monitoring component which detects the file accesses and informs a content management component thereof. The content management component includes the controller already mentioned above which helps ensuring that a target maximum storage criterion (and/or other user preferences) is satisfied by the local storage memory 4 of the mobile phone 1. The mobile phone 1 further comprises a transfer management component which handles downloads and uploads in relation with the network 2. Those components may take account of parameters such as a level of a battery of the mobile phone 1, a type of the network 2, an estimate quality of a communication link between the mobile phone 1 and the network 2, a processing availability of the mobile phone 1, a bandwidth availability, and/or other.

Many other implementations may be envisaged as will appear to one skilled in the art.

All or part of the operations mentioned so far may be carried out by means of at least one computer program product loaded and run on a device such as the mobile phone 1.

## Claims

1. A method of managing data storage for a device (1) having a local storage memory (4) and a user interface, the device being capable of transferring data to a network (2) having a remote storage memory (5), the remote storage memory having a higher storage capacity than the local storage memory, the method comprising:
- obtaining, by means of said user interface of the device, a target maximum storage criterion to be satisfied by the local storage memory; and
- on detection that said target maximum storage criterion is not satisfied by the local storage memory, selecting a set of data stored in the local storage memory to be transferred from the device to the network for storage in the remote storage memory, in such a way that the target maximum storage criterion be subsequently satisfied by the local storage memory.

2. The method as claimed in claim 1, wherein the target maximum storage criterion comprises a target maximum storage ratio between the local storage memory (4) and the remote storage memory (5).

3. The method as claimed in claim 1, wherein the target maximum storage criterion comprises a target maximum occupancy of the local storage memory (4).

4. The method as claimed in claim 1, wherein the target maximum storage criterion to be satisfied by the local storage memory (4) is set by means of a movable cursor (8;12;16) displayed on said user interface of the device (1).

5. The method as claimed in claim 1, further comprising obtaining, by means of said user interface of the device (1), a data type related storage criterion to be satisfied by the local storage memory (4), the selection of said set of data taking account of said data type related storage criterion.

6. The method as claimed in claim 1, further comprising obtaining, by means of said user interface of the device (1), a data usage criterion relating to data stored in the local storage memory (4), the selection of said set of data taking account of said data usage criterion.

7. The method as claimed in claim 6, wherein the selection of said set of data further takes account of a size of data stored in the local storage memory (4).

8. The method as claimed in claim 1, further comprising transferring from the device (1) to the network (2) the selected set of data depending on a level of battery (BL) of the device.

9. The method as claimed in claim 1, further comprising transferring from the device (1) to the network (2) the selected set of data depending on a type of the network (NT).

10. The method as claimed in claim 1, further comprising transferring from the device (1) to the network (2) the selected set of data depending on an estimate quality (EQ) of a communication link (6) between the device and the network.

11. The method as claimed in claim 1, further comprising transferring from the device (1) to the network (2) the selected set of data depending on device processing (PR) or bandwidth availability (BA).

12. The method as claimed in claim 1, wherein the device (1) is further capable of transferring data from the network (2) in such a way that the target maximum storage criterion be still satisfied by the local storage memory (4) after a data transfer from the network.

13. The method as claimed in claim 12, wherein the data transfer from the network (2) to the device (1) depends on at least one of: a level of a battery of the device, a type of the network, an estimate quality of a communication link between the device and the network, a processing availability of the device, and a bandwidth availability.

14. A device (1) arranged for carrying out the method as claimed in any one of claims 1 to 13, the device having a local storage memory (4) and being capable of transferring data to a network (2) having a remote storage memory (5), the remote storage memory having a higher storage capacity than the local storage memory, the device comprising:
- a user interface arranged for obtaining a target maximum storage criterion to be satisfied by the local storage memory; and
- a selection unit for, on detection that said target maximum storage criterion is not satisfied by the local storage memory, selecting a set of data stored in the local storage memory to be transferred from the device to the network for storage in the remote storage memory, in such a way that the target maximum storage criterion be subsequently satisfied by the local storage memory.

15. A user interface for a device (1) arranged for carrying out the method as claimed in any one of claims 1 to 13, the device having a local storage memory (4) and being capable of transferring data to a network (2) having a remote storage memory (5), the remote storage memory having a higher storage capacity than the local storage memory, the user interface being further arranged for:
- obtaining a target maximum storage criterion to be satisfied by the local storage memory; and
- transmitting the received target maximum storage criterion to a selection unit of the device arranged for, on detection that the received target maximum storage criterion is not satisfied by the local storage memory, selecting a set of data stored in the local storage memory to be transferred from the device to the network for storage in the remote storage memory, in such a way that the received target maximum storage criterion be subsequently satisfied by the local storage memory.
